# EUROPEAN PATENT APPLICATION

(11) **EP 2 506 624 A1**
(43) Date of publication of application: **03.10.2012**
(21) Application number: 10833257.8
(22) Date of filing: 25.11.2010
(51) Int. Cl.: H04W 16/28, H04W 72/04, H04W 72/08, H04J 11/00

(54) **WIRELESS COMMUNICATION SYSTEM, BASE STATION APPARATUS, AND FREQUENCY ALLOCATING METHOD**

(30) Priority: 26.11.2009 JP 2009268816
(71) Applicant: Sharp Kabushiki Kaisha, Osaka-shi, Osaka 545-8522 (JP)
(72) Inventor: TAKAHASHI Hiroki c/o SHARP KABUSHIKI KAISHA, Osaka 545-8522 (JP); HAMAGUCHI, Yasuhiro c/o SHARP KABUSHIKI KAISHA, Osaka 545-8522 (JP); YOKOMAKURA, Kazunari c/o SHARP KABUSHIKI KAISHA, Osaka 545-8522 (JP); NAKAMURA, Osamu c/o SHARP KABUSHIKI KAISHA, Osaka 545-8522 (JP); GOTO, Jungo c/o SHARP KABUSHIKI KAISHA, Osaka 545-8522 (JP)
(74) Representative: Müller - Hoffmann & Partner
(86) International application number: PCT/JP2010/070998
(87) International publication number: WO 2011/065411

(57) **Abstract**

A wireless communication system includes: a plurality of transmitter apparatuses each of which converts a transmitted signal into a frequency signal, then places the frequency signal into a frequency spectrum allocated to the transmitter apparatus and then transmits the signal; and a receiver apparatus that receives the signals transmitted by the plurality of transmitter apparatuses, removes the interference between the signals of the transmitter apparatuses, and separates the signals of the respective transmitter apparatuses; wherein the bandwidth obtained by summing the frequency spectra allocated to the plurality of transmitter apparatus exceeds the allocatable system bandwidth.

## Description

### TECHNICAL FIELD

The present invention relates to a wireless communication system, a base station apparatus, and a frequency allocating method.
The subject application claims priority based on the patent application No. 2009-268816 filed in Japan on November 26, 2009 and incorporates by reference herein the content thereof.

### BACKGROUND ART

In recent years, next-generation mobile station wireless communication systems have been actively researched, and there is a desire to achieve a larger transmission capacity using a limited frequency bandwidth. For example, one multiplexing system in an environment in which a plurality of mobile stations exist in one and the same cell is FDM (frequency division multiplexing) scheduling, in which the overall frequency bandwidth is divided into allocation units called resource blocks (RBs), mutually different RBs being allocated to each mobile station, and communication being performed simultaneously. In this system, however, because an RB that is being used by one mobile station cannot be allocated to other mobile stations, in the case in which there is a large number of existing mobile stations, there is a severe limitation on the bandwidth that can be used by each of the mobile stations. In such a case, one method of improving the transmission capacity without changing the bandwidth is AMC (adaptive modulation and coding), in which the transmission bit rate is increased by changing the modulation mode or encoding rate of the error correction code in accordance with a channel condition.

However, if the modulation mode in AMC is changed to one that has more levels, such as a change from QPSK (quaternary phase-shift keying) to 16QAM (16-ary quadrature amplitude modulation), because the number of bits that can be transmitted at one time is increased, that is, because the signal-to-signal distance at the modulated signal point is made narrower, although the bit rates increases, a large amount of transmitting energy is required for each bit. For this reason, if sufficient transmitting energy cannot be obtained, the error rate increases and throughput decreases. Also, as the coding rate in the error correction code increases, although the bit rate increases, the error correction capability of the error correction code decreases, so that the bit error rate increases. Therefore, in order to increase the throughput by AMC, it is necessary, after grasping the bit error rate characteristics for each modulation mode and each coding rate, to use the transmitting power required to obtain the desired bit rate and suppress the bit error rate to a sufficiently low level and, because the transmitting power is limited by the capacity of the transmitter apparatus, a high signal-to-noise power ratio (SNR) is required.

In the case of using FDM in a multi-user environment, allocation is done of the frequency spectrum so as to mutually avoid frequencies that are allocated to another mobile station. For this reason, there is the problem that, even though the SNR in a given frequency spectrum is good, it is already allocated to another mobile station, and as a result a frequency spectrum having a low SNR is allocated. With respect to this problem, SORM (spectrum-overlapped resource management) technology has been proposed (for example, in Non-Patent Document 1), in which allocation is done in which partial overlapping of frequency spectra is allowed between mobile stations, thereby enabling allocation to each mobile station a frequency spectrum having the optimum transmission path characteristics.

In SORM technology, with the prerequisite that overlapping interference be reduced by non-linear iterative equalization processing, IUI (inter-user interference) between receiver apparatuses is removed as each receiver apparatus makes allocation of spectrum the desired frequency, utilizing the energy of the desired signal, making it possible to obtain a decoded signal for each mobile station.

### Prior Art Document

### Non-Patent Document

Non-Patent Document 1: Yokomakura et al. "Spectrum-overlapped Resource Management Using Dynamic Spectrum Control", Institute of Electronics, Information and Communication Engineers 2008 General Conference Proceedings, B-5-51, March, 2008.

### DISCLOSURE OF INVENTION

### Problem to be Solved by the Invention

In the SORM technology described in Non-Patent Document 1, however, because the number of symbols per user is 512 and the number of users is 2, the total frequency bandwidth allocated to each mobile station is 512 × 2 = 1024. Also, because the system bandwidth, with the number of FFT (fast Fourier transform) points being 1024 in Non-Patent Document 1, is equal to the total frequency bandwidth allocated to each mobile station, if frequency spectrum is allocated allowing overlapping, there is the problem that a part of the frequency bandwidth is not effectively used.

The present invention was made in consideration of this situation, and has an object to provide a wireless communication system, a base station apparatus, and a frequency allocating method that enable an increase in the frequency bandwidth that is effectively used, and an improvement in the cell throughput, which is the total of the throughput of all the mobile stations.

### Means to Solve the Problem

(1) A first aspect of the present invention is a wireless communication system including: a plurality of transmitter apparatuses each of which converts a transmitted signal into a frequency signal, then places the frequency signal into a frequency spectrum allocated to the transmitter apparatus and then transmits the signal; and a receiver apparatus that receives the signals transmitted by the plurality of transmitter apparatuses, removes the interference between the signals of the transmitter apparatuses, and separates the signals of the respective transmitter apparatuses; wherein the bandwidth obtained by summing the frequency spectra allocated to the plurality of transmitter apparatus exceeds the allocatable system bandwidth.

(2) In the first aspect of the present invention, the frequency spectrum may be allocated to the transmitter apparatus until the condition for ending allocation is satisfied, based on at least one of an allowable overlapping ratio that is an overlapping ratio of the frequency spectra between the transmitter apparatuses and that is an overlapping ratio satisfying the desired communication quality, and a transmittable bandwidth of each of the transmitter apparatuses.

(3) In the first aspect of the present invention, allocation that allows overlapping may be additionally performed, after allocating the frequency spectrum with respect to the plurality of transmitter apparatus without allowing overlapping, until the condition for completion of allocation is satisfied, based on at least one of an allowable overlapping ratio that is an overlapping ratio of the frequency spectra between the transmitter apparatuses and that is an overlapping ratio satisfying the desired communication quality, and a transmittable bandwidth of each of the transmitter apparatuses.

(4) In the first aspect of the present invention, the condition for completion of allocation may be such that the bandwidth obtained by summing the frequency spectra allocated to all of the transmitter apparatus reaches an allowable allocated bandwidth calculated by the allowable overlapping ratio and a system bandwidth, or the bandwidth obtained by summing the frequency spectra allocated to each of all the transmitter apparatus reaches the transmittable bandwidth of the transmitter apparatus.

(5) In the first aspect of the present invention, an allocated bandwidth not allowing overlapping may be decided based on the number of a plurality of transmitter apparatuses, the allocatable system bandwidth, and the allowable overlapping ratio that is a overlapping ratio of the frequency spectra between the transmitter apparatuses and that is a overlapping ratio satisfying the desired communication quality and wherein after performing allocation not allowing overlapping based on the allocated bandwidth not allowing the overlapping, allocating of frequency spectra of all the transmitter apparatuses is done with respect to the frequencies not allocated.

(6) In the first aspect of the present invention, the allowable overlapping ratio may be calculated based on the propagation channel characteristics from the transmitter apparatus to the receiver apparatus so as to separate the received signals into signals of the respective transmitter apparatus with a desired quality in the receiver apparatus.

(7) A second aspect of the present invention is a base station apparatus that converts a transmitted signal into a frequency signal, receives the signals transmitted by a plurality of mobile station apparatuses, each of which places a frequency signal into a frequency spectrum allocated thereto and then transmits the signal, and removes the interference between the signals of the mobile station apparatuses and separates them into the signals of the respective mobile station apparatus; wherein the bandwidth obtained by summing the frequency spectra allocated to the plurality of mobile station apparatuses exceeds the allocatable system bandwidth.

(8) A third aspect of the present invention is a method for allocating a frequency in a wireless communication system including: a plurality of transmitter apparatuses each of which converts a transmitted signal into a frequency signal, places the frequency signal into a frequency spectrum allocated to the transmitter apparatus and then transmits the signal; and a receiver apparatus that receives the signals transmitted by the plurality of transmitter apparatuses, removes the interference between the signals of the transmitter apparatuses, and separates them into signals of the respective transmitter apparatus; wherein the bandwidth obtained by summing the frequency spectra allocated to the plurality of transmitter apparatus exceeds the allocatable system bandwidth.

### Effect of the Invention

According to the present invention, because the total bandwidth that is the total of the frequency spectra allocated to a plurality of transmitter apparatuses exceeds the allocatable system bandwidth, it is possible to increase the effectively used frequency bandwidth and to improve the cell throughput.

### BRIEF DESCRIPTION OF THE DRAWINGS

FIG. 1 is a conceptual drawing showing the general constitution of a wireless communication system in a first embodiment of the present invention.
FIG. 2 is a simplified block diagram showing the constitution of a mobile station apparatuses 11 to 14 and a base station apparatus 15 in the same embodiment.
FIG. 3 is a simplified block diagram showing the constitution of a transmitting unit 102, which is the transmitter apparatus in the same embodiment.
FIG. 4 is a simplified block diagram showing the constitution of a receiving unit 503 that is a receiver apparatus and a control unit 501 in the same embodiment.
FIG. 5 is a drawing describing the operating principle in the scheduling unit 308 in the same embodiment.
FIG. 6 is a flowchart describing the scheduling by the scheduling unit 308 in the same embodiment.
FIG. 7 is a simplified block diagram showing the constitution of a receiving unit 503 and a control unit 501a in a second embodiment of the present invention.
FIG. 8 is a drawing describing the operating principle in the scheduling unit 308a in the same embodiment.
FIG. 9 is a flowchart describing the scheduling by the scheduling unit 308a in the same embodiment.
FIG. 10 is a simplified block diagram showing the constitution of the receiving unit 503 and a control unit 501 b in a third embodiment of the present invention.
FIG. 11 is a drawing describing the operating principle in a scheduling unit 308b in the same embodiment.
FIG. 12 is a flowchart describing the operation of the scheduling unit 308b in the same embodiment.

### BEST MODE FOR CARRYING OUT THE INVENTION

### [First Embodiment]

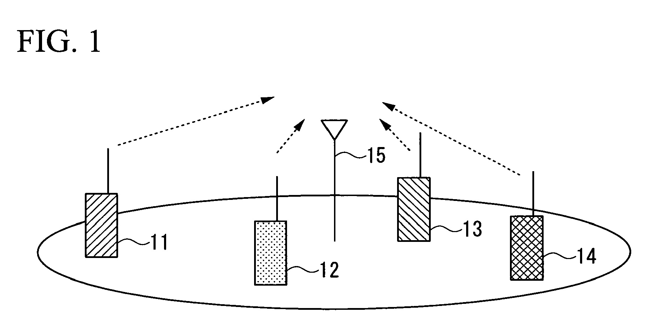

The first embodiment of the present invention will be described below, with references made to the drawings. FIG. 1 is a conceptual drawing showing the general constitution of a wireless communication system in the embodiment of the present invention. As shown in FIG. 1, the wireless communication system in the present embodiment has mobile station apparatuses 11, 12, 13, and 14 that have transmitter apparatuses and a base station apparatus 15 that has a receiver apparatus. In this case, although the number U of mobile station apparatuses within one and the same cell is made U=4, the value of U may be another value, depending upon the condition in the cell. In the wireless communication system of FIG. 1, spectrum-overlapped resource management (SORM) is used in uplink communication from the mobile station apparatuses 11 to 14 to the base station apparatus 15. That is, when each of the mobile station apparatuses 11 to 14 transmits a signal to the base station apparatus 15, a part of the frequency signal is caused to overlap between mobile station apparatuses, and the base station apparatus 15 uses an interference suppression function to perform suppression. By doing this, each of the mobile station apparatuses 11 to 14 can perform transmission using a frequency at which there is a good receiving condition.

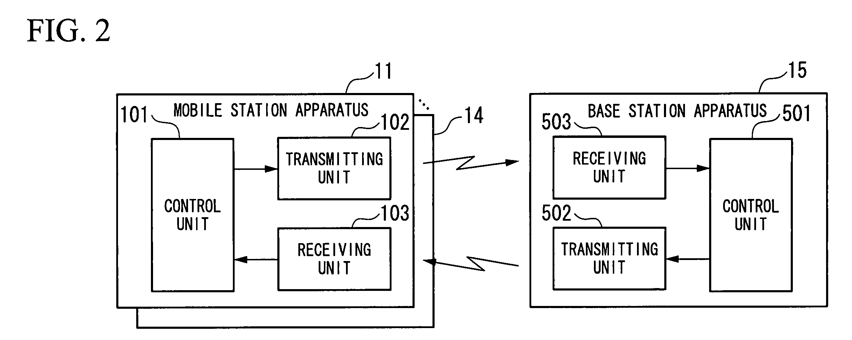

FIG. 2 is a simplified block diagram showing the constitution of the mobile station apparatuses 11 to 14 and the base station apparatus 15. The mobile station apparatuses 11 to 14 have one and the same constitution, and at this point only the mobile station apparatus 11 will be described as representative thereof. The mobile station apparatus 11 has a control unit 101, a transmitting unit 102, and a receiving unit 103. The base station apparatus 15 has a control unit 501, a transmitting unit 502, and a receiving unit 503.
The control unit 101 of the mobile station apparatus 11 controls the transmitting unit 102 and the receiving unit 103 and performs communication with the base station apparatus 15. The transmitting unit 102 converts the transmitted signal into a frequency signal, allocates the frequency signal to the frequency spectrum allocated to the mobile station apparatus 11, and transmits it to the base station apparatus 15. The receiving unit 103 receives from the base station apparatus 15 spectrum allocation information that indicates the frequency spectrum allocated to the mobile station apparatus 11.

The control unit 501 of the base station apparatus 15 controls the transmitting unit 502 and the receiving unit 503, and performs communication with each of the mobile station apparatuses 11 to 14. In particular, the control unit 501 allocates to each of the mobile station apparatuses 11 to 14 a frequency spectrum to be used in the uplink. The transmitting unit 502 sends to each of the mobile station apparatuses 11 to 14 spectrum allocation information indicating the frequency spectra allocated by the control unit 501 to each of the mobile station apparatuses 11 to 14. The receiving unit 503 receives the signals transmitted by each of the mobile station apparatuses 11 to 14, removes interference between the signals of the mobile station apparatuses 11 to 14, and separates them into the signals of each of the mobile station apparatuses 11 to 14.

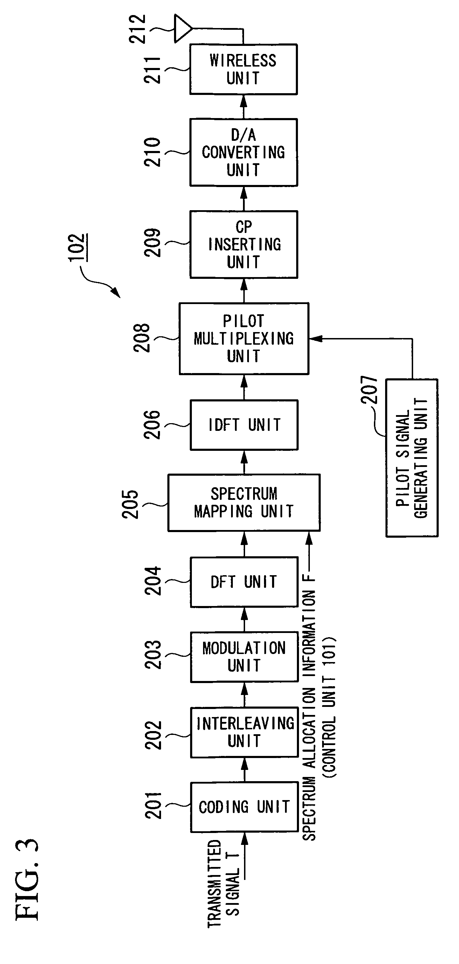

FIG. 3 is a simplified block diagram that shows the constitution of the transmitting unit 102, which is the transmitter apparatus in the present embodiment. The transmitting unit 102 has a coding unit 201, an interleaving unit 202, a modulation unit 203, a DFT (discrete Fourier transform) unit 204, a spectrum mapping unit 205, an IDFT (inverse discrete Fourier transform) unit 206, a pilot signal generating unit 207, a pilot multiplexing unit 208, a CP (cyclic prefix) inserting unit 209, a D/A (digital/analog) converting unit 210, a wireless unit 211, and a transmitting antenna 212.

The coding unit 201 error-correction codes transmitted data bits that make up the input transmitted data T, and generates the code data bits. The interleaving unit 202 changes the bit sequence (time order) of the code data bits. The modulation unit 203 maps the code bits re-sequenced by the interleaving unit 202 onto signal points, in accordance with the modulation mode, and generates the modulation signal (transmitted signal). In this case, the modulation mode is BPSK (binary phase-shift keying), QPSK (quadrature phase-shift keying), or the like. The DFT unit 204 performs a discrete Fourier transform on the modulation signal, transforming it to a frequency signal.

The spectrum mapping unit 205 receives from the control unit 101 the spectrum allocation information F that is notified from the base station apparatus 15 and, based on the spectrum allocation information F, places the frequency signal into a frequency spectrum allocated to the mobile station apparatus. The IDFT unit 206 performs an inverse discrete Fourier transform on the placed frequency signal, transforming it to a time signal. The pilot signal generating unit 207 generates a known pilot signal for the purpose of estimating the propagation channel characteristics in the base station apparatus 15. The pilot multiplexing unit 208 multiplexes the pilot signal generated by the pilot signal generating unit 207 with the time signal obtained by the IDFT unit 206. The CP inserting unit 209 inserts a cyclic prefix (CP) into the signal multiplexed by the pilot multiplexing unit 208. The D/A converting unit 210 converts the signal into which the cyclic prefix is inserted from a digital signal to an analog signal. The wireless unit 211 up-converts the analog signal converted by the D/A converting unit 210 to the wireless frequency, and transmits it to the receiving apparatus from the transmitting antenna 212.

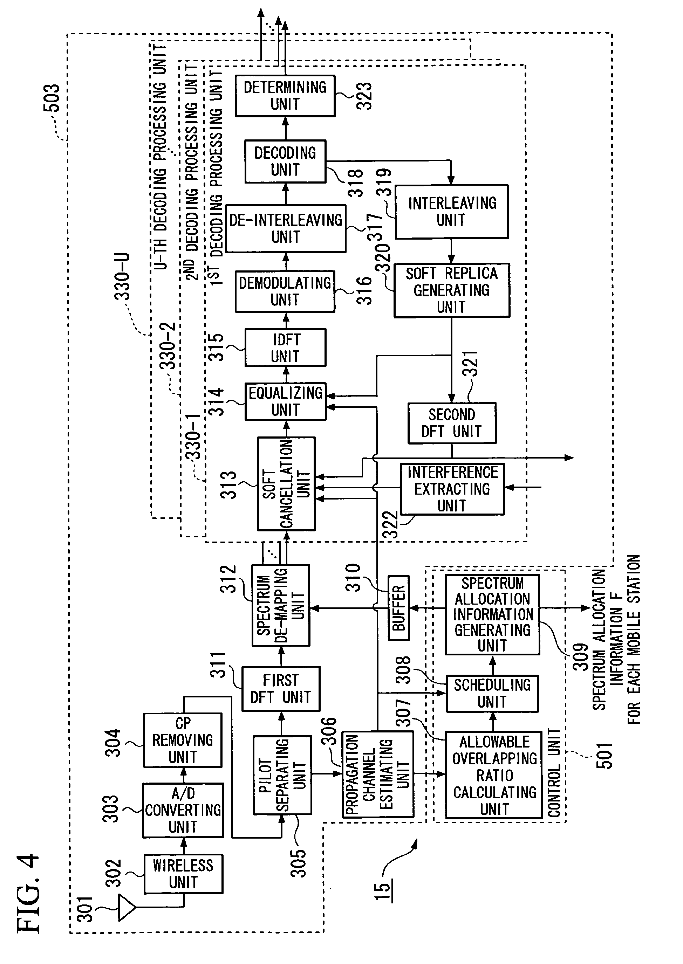

FIG. 4 is a simplified block diagram showing the constitution of the receiving unit 503 that is a receiver apparatus and a control unit 501 in the present embodiment. The receiving unit 503 shown in FIG. 4 is the constitution in the case in which the maximum number of mobile station apparatuses is U. The receiving unit 503 has a receiving antenna 301, a wireless unit 302, an A/D converting unit 303, a CP removing unit 304, a pilot separating unit 305, a propagation channel estimating unit 306, a buffer 310, a first DFT unit 311, a spectrum de-mapping unit 312, and a first decoding processing unit 330-1 to the U-th decoding processing unit 330-U. Each of the first decoding processing unit 330-1 to the U-th decoding processing unit 330-U has a soft cancelling unit 313, an equalizing unit 314, an IDFT unit 315, a demodulating unit 316, a de-interleaving unit 317, a decoding unit 318, an interleaving unit 319, a soft replica generating unit 320, a second DFT unit 321, an interference extracting unit 322, and a determining unit 323. The control unit 501 has an allowable overlapping ratio calculating unit 307, a scheduling unit 308, and a spectrum allocation information generating unit 309.

The wireless unit 302 receives the signals from the mobile station apparatuses 11 to 14 via the receiving antenna 301, down-converts them, and generates a baseband signal. The A/D converting unit 303 analog/digital converts the baseband signal to a digital signal. The CP removing unit 304 removes the cyclic prefix (CP) from the digital signal converted by the A/D converting unit 303. The pilot separating unit 305 separates the pilot signal of each of the mobile station apparatuses 11 to 14 from the digital signal from which the cyclic prefix has been removed. The propagation channel estimating unit 306 uses the separated pilot signals from each of the mobile station apparatuses 11 to 14 to estimate the propagation channel characteristics from each transmitting antenna 212 to the base station apparatus 15 for each of the mobile station apparatuses 11 to 14. The propagation channel estimating unit 306 outputs the estimated propagation channel characteristics to the soft cancelling unit 313, the equalizing unit 314, the allowable overlapping ratio calculating unit 307, and the scheduling unit 308.

The allowable overlapping ratio calculating unit 307, based on the propagation channel characteristics (for example, the receiving SNR (signal-to-noise ratio)), determines and outputs to the scheduling unit 208 the allowable overlapping ratio that is allowable within the system bandwidth. For example, when using a specific modulation mode and coding rate, the value of the allowable overlapping ratio is set beforehand in accordance with the average receiving SNR so that the error rate is below a certain value, and the allowable overlapping ratio calculating unit 307, in accordance with this setting, determines the allowable overlapping ratio that is in accordance with the frequency-direction average value of the receiving SNR for the received signal. The scheduling unit 308 determines the spectrum allocation of what subcarrier each of the mobile station apparatuses 11 to 14 are to use, based on the propagation channel characteristics given by the propagation channel estimating unit 306. When this is done, although scheduling is done so as to determine the spectrum allocation so as to allow partial spectrum overlapping, the allowable overlapping ratio is given by the allowable overlapping ratio calculating unit 307. The spectrum allocation information generating unit 309 generates the spectrum allocation information F that indicates the spectrum allocation determined by the scheduling unit 308, and outputs it to the transmitting unit 502 for feedback to each of the mobile station apparatuses 11 to 14. At the same time, the spectrum allocation information generating unit 309 storages the spectrum allocation information to the buffer 310 as mapping information for returning the frequency signal to the original in the spectrum de-mapping unit 312 at the next transmission opportunity.

The first DFT unit 311 performs a discrete Fourier transform on the received signal from which the pilot signal was separated in the pilot separating unit 305, transforming it to a frequency signal. The spectrum de-mapping unit 312 extracts from the buffer 310 mapping information obtained at the previous transmission opportunity and, based on the mapping information, separates the signals of each of the mobile station apparatuses 11 to 14 from the frequency signal obtained by the transformation by the first DFT unit 311. The spectrum de-mapping unit 312 outputs the separated signals of each of the mobile station apparatuses 11 to 14 to the decoding processing units 330-1 to 330-4 that correspond to each of the mobile station apparatuses 11 to 14.

At this stage, because, based on only the mapping information, the frequency signals in a frequency spectrum into which each of the mobile station apparatuses 11 to 14 places a frequency signal are just extracted for the mobile station apparatuses 11 to 14 individually, mutual interference remains regarding some of the frequency signals that were overlapped at the time of transmission.
For example, when the mobile station apparatuses 11 and 13 place a frequency signal in a given frequency spectrum, the spectrum de-mapping unit 312 outputs that frequency spectrum signal to the first decoding processing unit 330-1, which is the decoding unit corresponding to the mobile station apparatus 11, and to the third decoding processing unit 330-3, which is the decoding unit corresponding to the mobile station apparatus 13.

Because the first decoding processing unit 330-1 to the U-th decoding processing unit 330-U have the same constitution, and are different only regarding which mobile station apparatus they correspond to, at this point only the first decoding processing unit 330-1, which corresponds to the mobile station apparatus 11 will be described, the descriptions of the other decoding processing units being omitted.
The soft cancelling unit 313 of the first decoding processing unit 330-1 cancels from the received signal from a mobile station apparatus 11 that has been returned the original position by the spectrum de-mapping unit 312 the replica of its own signal and interference replica from other mobile station apparatus, obtained from the second DFT unit 321 and the interference extracting unit 322, and inputs the residual error to the equalizing unit 314. At the first time, because a replica cannot be generated, nothing is cancelled.

The equalizing unit 314 uses the residual error output from the soft cancellation unit 313, the replica obtained from the soft replica generating unit 320, and the propagation channel characteristics estimated by the propagation channel estimating unit 306 to reconstruct the desired components, and perform equalization processing that compensates the distortion of the signal by the wireless propagation channel. The IDFT unit 315 performs an inverse discrete Fourier transform on the equalized signal, converting it to a time signal. The demodulating unit 316 demodulates this time signals, making it the log likelihood ratio (LLR) that represents the reliability of each bit. In this case, the log likelihood ratio is expressed as the natural logarithm (logarithm to the base e (Napier's constant)) of the ratio of the probability of a code bit being 1 to the probability of a code bit being 0.

The de-interleaving unit 317, with regard to the log likelihood ratio for each code bit obtained by the demodulating unit 316, restores the sequence according to the interleaving by the interleaving unit 202 of the mobile station apparatus 11 to the original sequence, and outputs it to the decoding unit 318. The decoding unit 318, with regard to the log likelihood ratio for each code bit, performs error correction processing based on maximum a posteriori probability (MAP) estimation, and outputs the external LLR of code bits with improved likelihood and the post LLR of the information bits. In this case, the external LLR is the value obtained by subtracting the log likelihood ratio of the code bits input to the decoding unit 318 from the post LLR of the code bits, which is the log likelihood ratio of the code bits with improved likelihood by error correction processing, and this represents the reliability that is improved only by error correction processing. The information bits are bits obtained by decoding the code bits, these corresponding to the transmitted data bits that constitute the transmitted data of the mobile station apparatuses 11 to 14.

The coding unit 318 inputs the external LLR to the interleaving unit 319 for use in repeated processing, an outputs the post LLR of the information bits to the determining unit 323 for use in determining the transmitted bits. The interleaving unit 319 applies interleaving to the external LLR, which is the same type of re-sequencing as in the interleaving unit 202 of the mobile station apparatus 11. The soft replica generating unit 320 generates a soft replica having an amplitude that is based on the reliability obtained from the interleaved external LLR. The soft replica generating unit 320 outputs the obtained soft replica to the equalizing unit 314 and, for the purpose of soft cancellation, to the second DFT unit 321.

The second DFT unit 321 performs a discrete Fourier transform on the soft replica, converting it to a frequency signal. The second DFT unit 321 inputs the obtained frequency signal to the soft cancelling unit 313 for soft cancellation of its own signal and, for the purpose of cancelling interference between the signals of the mobile station apparatuses, outputs it as well to the interference extracting units 322 in the second to the fourth decoding processing units 330-2 to 330-4, which are decoding processing units corresponding to the other mobile station apparatuses 12 to 14. The interference extracting unit 322, of the frequency signals received from the other decoding processing units 330-2 to 330-4, extracts the one that is the interference signal with respect to the signal of the mobile station apparatus 11 based on the spectrum allocation information, and outputs it to the soft cancelling unit 313.

The processing by the various units of the first decoding processing unit 330-1 is repeated for the same signal a pre-determined number of times, and finally the post LLR of the information bits obtained by the decoding unit 318, by a hard determination made by the determining unit 323, detects the transmitted data of the mobile station apparatus 11. Rather than repeating the processing a pre-determined number of times, repetition may be done, for example, until the absolute values of the post LLR of all the information bits becomes larger than a pre-established value, this being set as the repetition ending condition, so that repetition is done until this condition is satisfied.

By each of the first decoding processing unit 330-1 to the fourth decoding processing unit 330-4 repeating the processing as noted above, it is possible to remove the IUI (inter-user interference) between the mobile station apparatuses 11 to 14 as the desired frequency spectrum is allocated to each of the mobile station apparatuses 11 to 14, thereby obtaining the transmitted data of each of the mobile station apparatuses 11 to 14.

In the present embodiment, in order to achieve the maximum frequency selection diversity effect, frequencies are allocated for each mobile station in the sequence of decreasing propagation channel characteristics, similar to SORM technology. In this case, although in conventional SORM scheduling the case of the sum of the allocated bandwidths to each mobile station exceeding the system bandwidth is not considered, in the present embodiment a separate ending condition of scheduling is established and, by continuing scheduling until that condition is satisfied, it is possible for the system as a whole to perform transmission with a wider bandwidth.

In this case, although in SORM technology the removal of IUI caused by frequency spectrum overlapping is done by non-linear iterative equalization processing at the receiving side, when that is done the receiving side uses information from locations at which there is no frequency spectrum overlapping to perform error correction and then to generate a replica and remove interference. For this reason, if the frequency spectrum overlapping ratio becomes excessively high, the replica accuracy for interference removal decreases and it is not possible to remove IUI. As a result, it is not possible to expect an improvement in the error rate characteristics. Thus, it is desirable that the upper limit of the overlapping ratio be set in accordance with the demanded communication quality.

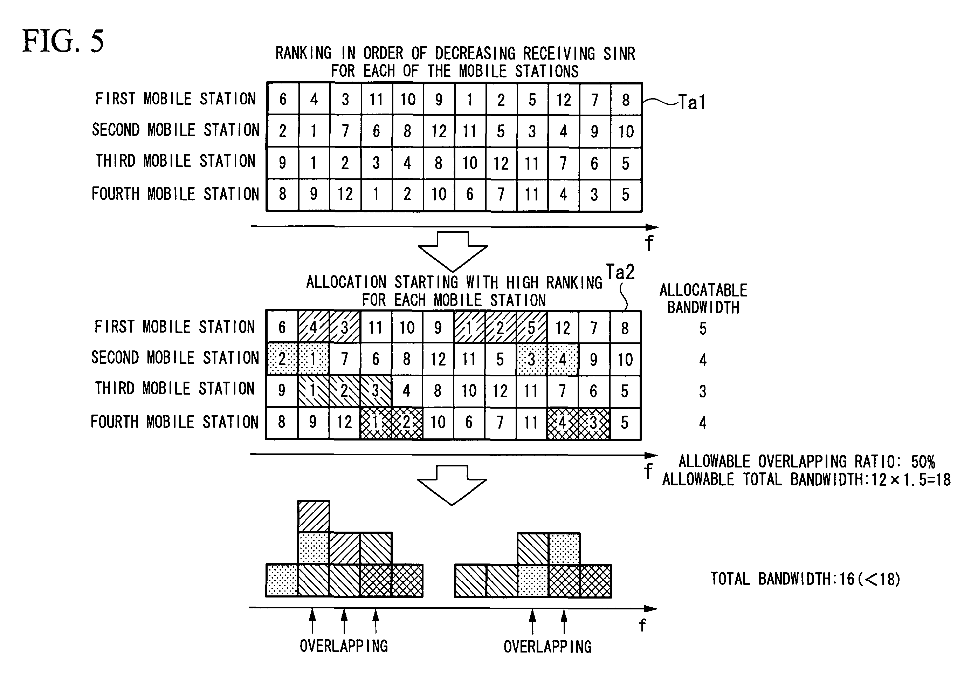

FIG. 5 is a drawing describing the operating principle in the scheduling unit 308 of the present embodiment. First, the scheduling unit 308 performs ranking for each mobile station in order of decreasing propagation channel characteristics, which are given by the overall system bandwidth receiving SINR (signal-to-interference-and-noise power ratio) and communication path capacity and the like, and performs scheduling based on those values. The propagation channel characteristics values may be used as is, without performing ranking. The sequence of performing scheduling may be done in order of decreasing propagation channel characteristics value of the combinations of all the mobile stations and frequency bandwidths, and may be allocated in the sequence from the higher frequency bandwidths with high propagation channel characteristics value for each allocation unit for each mobile station.

In FIG. 5, division is done into 12 allocation units in the frequency direction of the system bandwidth, with each of four mobile stations ranked (Ta1) by allocation units in the sequence of decreasing receiving SINR and, with respect to each mobile station, sequential allocation is made from the one that is one rank higher (Ta2). In the example shown in FIG. 5, in the table Ta1, in which the four mobile stations are ranked by allocation units in the sequence of decreasing receiving SINR, with regard to the first mobile station, the ranking is done as "6, 4, 3, 11, 10, 9, 1, 2, 5, 12, 7, 18" from the low frequency end. In the same manner, with regard to the second mobile station, the ranking is "2, 1, 7, 6, 8, 12, 11, 5, 3, 4, 9, 10", with regarding to the third mobile station, the ranking is ``9, 1, 2, 3, 4, 8, 10, 12, 11, 7, 6, 5", and with regard to the fourth mobile station, the ranking is ``8, 9, 12, 1, 2, 10, 6, 7, 11, 4, 3, 5".

The condition for ending of the scheduling may be established by ending the scheduling when the allocated bandwidth for all of the mobile stations reaches the allocatable bandwidth, which is determined by the transmitting power of each of the mobile stations, by ending the scheduling when the total of the allocated bandwidths for all the mobile stations reaches the allowable total bandwidth determined by the allowable overlapping ratio, or by ending the scheduling at the point at which one of the conditions has been satisfied. At this point, the description will be for the case of ending at the point in time when either of the conditions is satisfied. In FIG. 5, the allowable overlapping ratio is 50%. That is, 18 allocation units, which is 1.5 times the system bandwidth, which is made up of 12 allocation units, is the allowable total bandwidth. The allocatable bandwidths for the first to the fourth mobile stations are, respectively, 5 allocation units, 4 allocation units, 3 allocation units, and 4 allocation units. Even if the greatest possible allocation is made to all mobile stations, the total bandwidth is 16 allocation units, and because this does not exceed 18 allocation units that are allowable total bandwidths, scheduling is ended when the allocated bandwidth for all the mobile stations reaches the allocatable bandwidths. The allocatable bandwidth for each of the mobile stations may be stored by the scheduling unit 308 beforehand and, when communications begins with the base station apparatus 15, the mobile station may notify the base station apparatus 15 of information indicating the allocatable bandwidth, the value indicated by the notified information being stored by the scheduling unit 308.

As a result, to the first mobile station, the 2^{nd}, 3^{rd}, 7^{th}, 8^{th}, and 9^{th} allocation units are allocated, from the low frequency end, these being the allocation units having ranks 1 to 5. To the second mobile station, the 1^{st}, 2^{nd}, 9^{th}, and 10^{th} allocation units are allocated, from the low frequency end, these being the allocation units having ranks 1 to 4. To the third mobile station, the 2^{nd}, 3^{rd}, and 4^{th} allocation units are allocated, these being the allocation units having ranks 1 to 3. To the fourth mobile station, the 4^{th}, 5^{th}, 10^{th}, and 11^{th} allocation units are allocated, from the low frequency end, these being the allocation units having ranks 1 to 4. The number of allocation units allocated is a total of 16, these being, from the low frequency end, the 2^{nd}, 3^{rd}, 4^{th}, 9^{th}, and 10^{th} allocation units, allocated with overlapping.

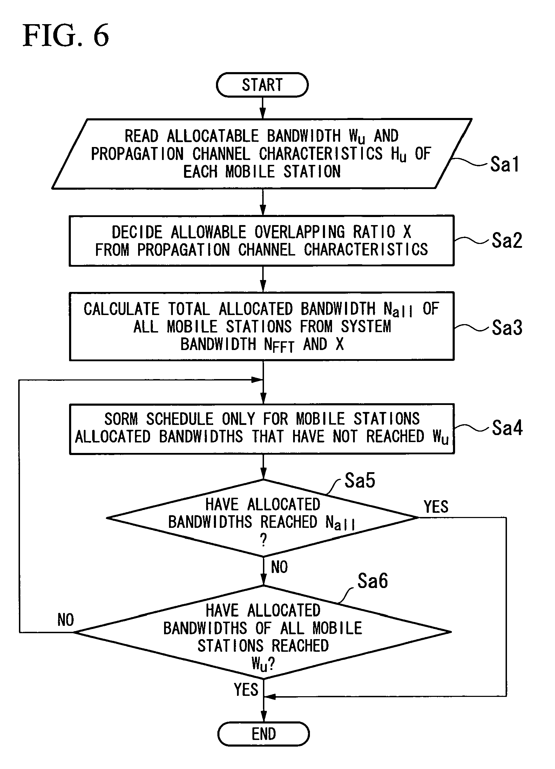

FIG. 6 is a flowchart that describes the scheduling by the scheduling unit 308, which is generalized for the case of the number of mobile stations being U. The scheduling unit 308 obtains the propagation channel characteristics Hᵤ (u=1, 2, ... , U) for each mobile station and the allocatable bandwidth Wᵤ (u=1, 2, ... , U) that differs for each mobile station and that is determined by the transmittable power of each mobile station (Sa1).
The propagation channel characteristics Hᵤ is obtained by the propagation channel estimating unit 306, and the allocatable bandwidth Wᵤ is obtained by reading what is stored beforehand by the scheduling unit 308. At the same time, the allowable overlapping ratio calculating unit 307 determines the allowable overlapping ratio X that is demanded from the propagation channel characteristics of all of the mobile stations, for the separation of the overlapping spectra (Sa2). Additionally, the scheduling unit 308 calculates the total allocated bandwidth Nₐₗₗ allocated to all the mobile stations, form the system bandwidth N_{FFT} and the allowable overlapping ratio X, using the equation Nₐₗₗ=N_{FFT} × (1 + X) (Sa3). The scheduling unit 308, based on the propagation channel characteristics Hᵤ, performs SORM scheduling with respect to only the mobile stations for which the allocated bandwidth does not reach Wᵤ (Sa4). and scheduling is ended when either the "allocated bandwidth reaches Nₐₗₗ" (Sa5) or the "allocated bandwidth of all mobile stations reaches Wᵤ" (Sa6), ending condition is satisfied.

In the present embodiment, by each mobile station considering only each of the propagation channel characteristics in performing the allocation, the maximum frequency selection diversity effect is achieved, and by establishing the allocating ending condition by the overlapping ratio, and not limited to the system bandwidth, compared to the conventional art it is possible to increase the effectively usable frequency bandwidth and improve the cell throughput, which is the total of the throughputs of all the mobile stations.

### [Second Embodiment]

In the first embodiment, by performing SORM scheduling until the allocation ending condition is satisfied, the maximum frequency selection diversity is achieved and also the cell throughput is improved. However, because a pre-established overlapping ratio is only reflected in the total bandwidth for all the mobile stations, the overlapping ratios of the individual mobile stations are not limited, and in the case in which a plurality of mobile stations are allocated to just overlapping frequencies, there is a possibility that the actual overlapping ratio will exceed the expectation, so that it is impossible to separate overlapped signals. Given this, a feature of the second embodiment is that the overlapping ratio is suppressed to the minimum and the capability of removing IUI using non-linear iterative equalization processing is maximized to improve characteristics. That is, in scheduling in the present embodiment, after first determining allocations of each mobile station using FDM, spectrum overlapping is allowed for mobile stations having a reserve of transmitting power, and SORM scheduling is performed until the allocation ending condition is satisfied, thereby determining the allocation. In this case, the ending condition may be established by ending when the allocated bandwidth for all of the mobile stations reaches the allocatable bandwidth, which is determined by the transmitting power of each of the mobile stations, by ending when the overlapping ratio within a cell reaches a prescribed allowable overlapping ratio, or by ending at the point at which one of the conditions has been satisfied. In this case, the overlapping ratio within a cell represents the proportion of the frequency points in which there is spectrum overlapping with respect to the system bandwidth in a plurality of mobile stations. The description below will be for the case of ending at the point in time when either of the conditions is satisfied.

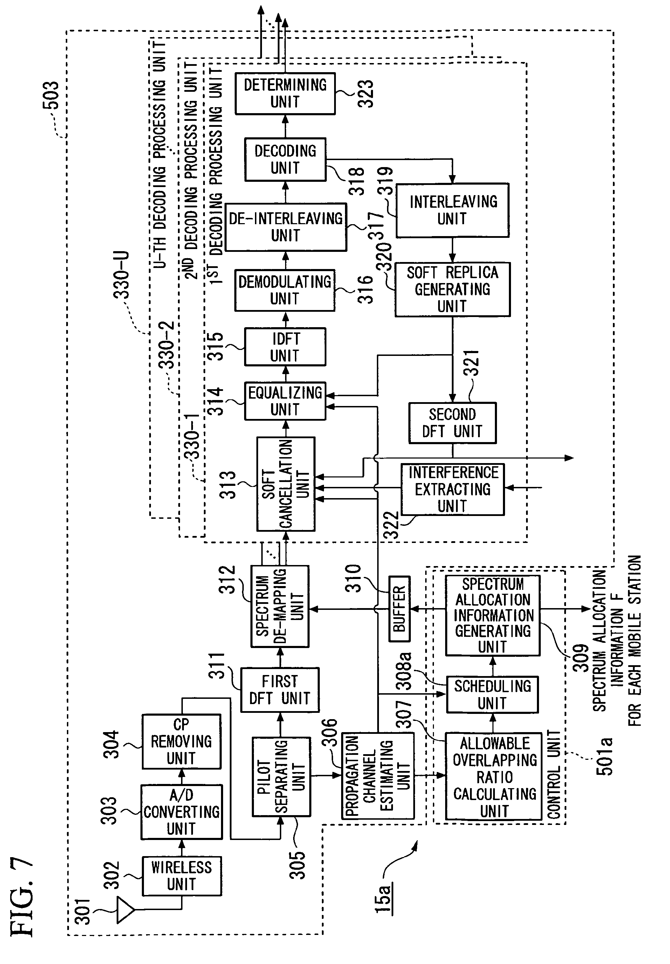

The wireless communication system according to the present embodiment has mobile station apparatuses 11 to 14 and a base station apparatus 15a. Because the configurations of the mobile station apparatuses 11 to 14 are the same as those of the mobile station apparatuses 11 to 14 as shown in FIG. 2, their descriptions will be omitted herein. The base station apparatus 15a differs from the base station apparatus 15 shown in FIG. 2 in that the control unit 501 that performs scheduling is the control unit 501 a. FIG. 7 is a simplified block diagram showing the constitution of the receiving unit 503 and the control unit 501 a in the present embodiment. In the same drawing, the parts that are similar to ones shown in FIG. 4 are assigned the same reference symbols (301 to 307, 309 to 323, 330-1 to 330-U, and 503), and the descriptions thereof will be omitted. The control unit 501a has the allowable overlapping ratio calculating unit 307, the scheduling unit 308a, and the spectrum allocation information generating unit 309. The scheduling unit 308 allocates frequency spectrum to the mobile station apparatuses 11 to 14 without allowing overlapping, and then allocates frequency spectrum to each of the mobile station apparatuses 11 to 14 until the allocation ending condition is satisfied.

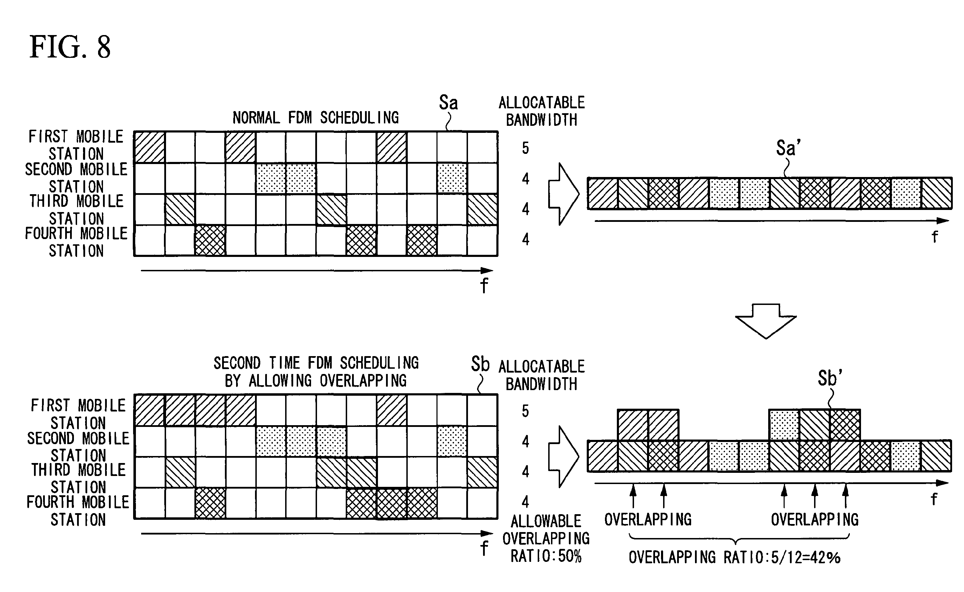

FIG. 8 is a drawing describing the operating principle in the scheduling unit 308a of the present embodiment. In this drawing, division is done into 12 allocation units in the frequency direction of the system bandwidth. The reference symbol Sa in FIG. 8 is a drawing showing spectrum allocation that is performed conventional FDM (frequency division multiplexing) scheduling, with the horizontal axis being frequency. In spectrum allocation Sa, to the first mobile station, the 1^{st}, 4^{th}, and 9^{th} allocation units (inclined hatching upward toward the right) are allocated, from the low frequency end. To the second mobile station, the 5^{th}, 6^{th}, and 11^{th} allocation units (dot-shaded hatching) are allocated, from the low frequency end. To the third mobile station, the 2^{nd}, 7^{th}, and 12^{th} allocation units (inclined hatching downward toward the right) are allocated, from the low frequency end. To the fourth mobile station, the 3^{rd} 8^{th}, and 10^{th} allocation units (diagonal checked hatching) are allocated, from the low frequency end. Regarding the allocatable bandwidth, the first mobile station is "5", the second mobile station is "4", the third mobile station is "4", and the fourth mobile station is "5". The reference symbol Sa' shows the result of vertically sliding the units allocated to each mobile station to arrange them in a line, so as to clarify the overlapping in each frequency of the scheduling allocation Sa. In the FDM scheduling, the allocated frequency spectrum are not overlapped between the mobile stations as shown in scheduling allocation Sa'.

The reference symbol Sb in FIG. 8 is a drawing showing the spectrum allocation in the case in which a second round of scheduling is performed after performing the FDM scheduling for the spectrum allocation Sa based on the present invention. Also, the drawing of the spectrum allocation Sb takes the horizontal axis as being frequency. The allowable overlapping ratio is 50%, the same as in the first embodiment. Because in the FDM scheduling of the spectrum allocation Sa, the first mobile station is allocated only 3 allocation units with respect to the allocatable bandwidth 5, there is still extra room for 2 allocation units before reaching the allocatable bandwidth. The second to fourth mobile stations have an extra 1 allocation unit. Therefore, in spectrum allocation Sb, in addition to allocation of the spectrum allocation Sa, to the first mobile station, the 2^{nd}, and 3^{rd} allocation units (inclined hatching upward toward the right) are allocated, from the low frequency end. To the second mobile station, the 7^{th} allocation units (dot-shaded hatching) are allocated, from the low frequency end. To the third mobile station, the 8^{th} allocation units (inclined hatching downward toward the right) are allocated, from the low frequency end. To the fourth mobile station, the 9^{th} allocation units (diagonal checked hatching) are allocated, from the low frequency end. As a result, as shown in schedule allocation Sb', the 2^{nd}, 3^{rd}, 7^{th}, 8^{th} and 9^{th} allocation units from the low frequency end, that is, 5 allocation units, are overlapped and allocated. Because 5 allocation units of 12 allocation units that are the system bandwidth are overlapped, the overlapping ratio is approximately 42%, calculated as 5 ÷ 12 x 100, this not exceeding the 50% that is the allowable overlapping ratio.

A method for scheduling at Sa shown in FIG. 8 and at Sb shown in FIG. 8 take propagation channel characteristics such as the average receiving SINR, the CQI (channel quality indicator), and communication path capacity and the like as references, using PF (proportional fairness), Max CIR (maximum carrier-to-interference power ratio), RR (round-robin), and the like.
In the same manner as in the first embodiment, the allocatable bandwidth for each of the mobile stations may be stored by the scheduling unit 308a beforehand and, when the each mobile stations begins communicating with the base station apparatus 15, the mobile station may notify the base station apparatus 15 of information indicating the allocatable bandwidth, the value indicated by the notified information being stored by the scheduling unit 308a.

In the case of only the allocation of Sa shown in FIG. 8, depending upon the scheduling conditions, there is a possibility, regardless of having a reserve of transmitting power and being able to perform broadband transmission, of only a narrow band being allocated due to occupation by other mobile station, and a mobile station, such as the first mobile station, existing that has a low data rate. In the conventional method, the improvement of the data rate by applying AMC (adaptive modulation and coding) is envisioned, because the FDM is scheduling to avoid the allocation of other mobile stations, depending upon the situation, it is easily influenced by channel deterioration and, in the case of such a situation, depending to the channel condition, the improvement of data rate cannot be expected with AMC that changes the modulation mode or the encoding system. In the case of Sb shown in FIG. 8, however, by enabling spectrum overlapping, it is possible that a mobile station having a reserve of transmitting power is caused to perform allocation so that there is overlapping with respect to frequency allocated to other mobile stations. By performing such allocation, compared with the case of conventional FDM scheduling, a mobile station can perform transmission with a broader bandwidth, and also can simultaneously use bandwidth having good propagation channel characteristics, which was occupied by other mobile stations and was not allocated in the FDM scheduling, thereby resulting in an improvement of the data rate.

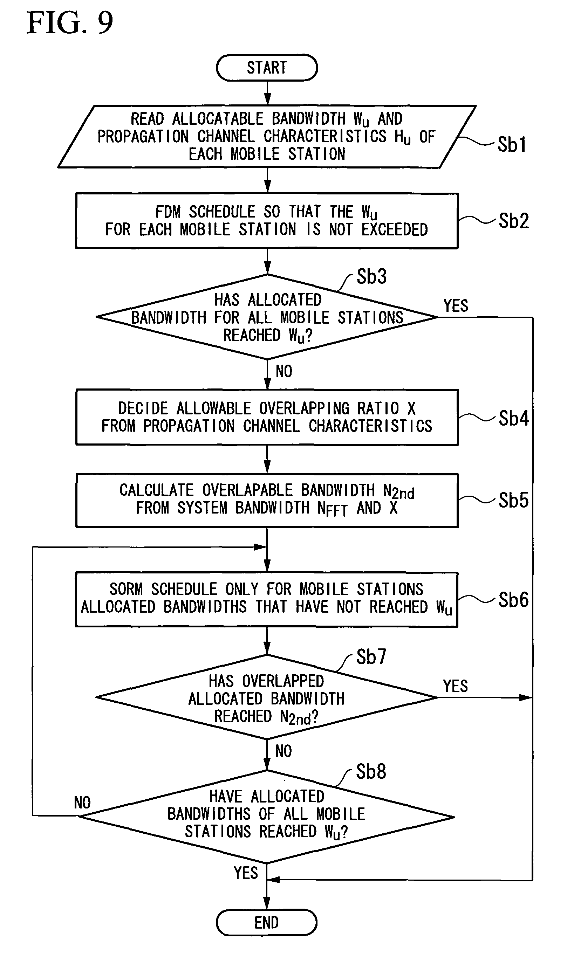

FIG. 9 is a flowchart describing an operation of the scheduling unit 308a in the present embodiment. First, the scheduling unit 308a obtains the propagation channel characteristics Hᵤ (u=1, 2, ... , U) for each mobile station and the allocatable bandwidth Wᵤ (u=1, 2, ... , U), which differs for each mobile station apparatus and that is determined by the transmittable power of each mobile station (Sb1). The propagation channel characteristics Hᵤ are obtained by the propagation channel estimating unit 306, and the allocatable bandwidth Wᵤ is obtained by reading what is stored beforehand by the scheduling unit 308a. The scheduling unit 308a, based on the acquired information, first performs FDM scheduling that does not allow overlapping (Sb2). At this stage, when the allocated bandwidth of all mobile stations reaches Wᵤ, the scheduling unit 308a ends scheduling (YES at Sb3), however, if there is a mobile station the bandwidth of which does not reach Wᵤ, it moves to SORM scheduling (NO at Sb3). First, for the purpose of avoiding deterioration of characteristics caused by excessive overlapping, the base station determines the allowable overlapping ratio X that is an overlapping ratio allowed from propagation channel characteristics of all mobile stations (Sb4). Next, the scheduling unit 308a, from the system bandwidth N_{FFT} and the allowable overlapping ratio X, calculates allowable bandwidth overlapping N_{2nd} = N_{FFT} × X, which is usable for SORM scheduling (Sb5). Although the scheduling unit 308a, performs SORM scheduling with only mobile stations in which allocation bandwidth does not reach Wᵤ (Sb6), at this stage, the allocation to each mobile station is performed with respect to allocation units with the exception of allocation units that are allocated to the mobile station by FDM scheduling at the step Sb2 or by SORM scheduling at past instances of step Sb6. The SORM scheduling is ended when either the overlapping allocated bandwidth reaches N_{2nd} (Sb7) or the allocated bandwidth of all mobile stations reaches the allocatable bandwidth Wᵤ(Sb8), thereby satisfying the ending condition.

In the present embodiment, by performing scheduling that does not allow overlapping, allocation that effectively uses the entire system bandwidth is performed, and then, by additionally performing scheduling that allows overlapping, overlapping between mobile stations is suppressed to a minimum, the transmission rate of each mobile station being caused to increase, enabling improvement of the cell throughput.

### [Third Embodiment]

In spectrum overlapping, for the purpose of accurately separating an overlapped signal, it is necessary that the residual IUI after processing performing non-linear iterative equalization processing in the equalizing unit be reduced as much as possible and, in order to satisfy this requirement, it is desirable that there be much spectral information that is not overlapped. Thus, for the purpose of achieving the concept of the present invention, that is, to improve the transmission rate by employing the spectrum overlapping while preventing characteristics deterioration caused by the residual IUI, it is necessary that the number of overlapping frequencies is suppressed as much as possible. From the standpoint of maintaining the transmission rate, however, it is not desirable to decrease the bandwidth per mobile station, and in order to increase the un-overlapped frequency while maintaining the bandwidth, it is effective to have as many mobile stations as possible on overlapping frequencies.

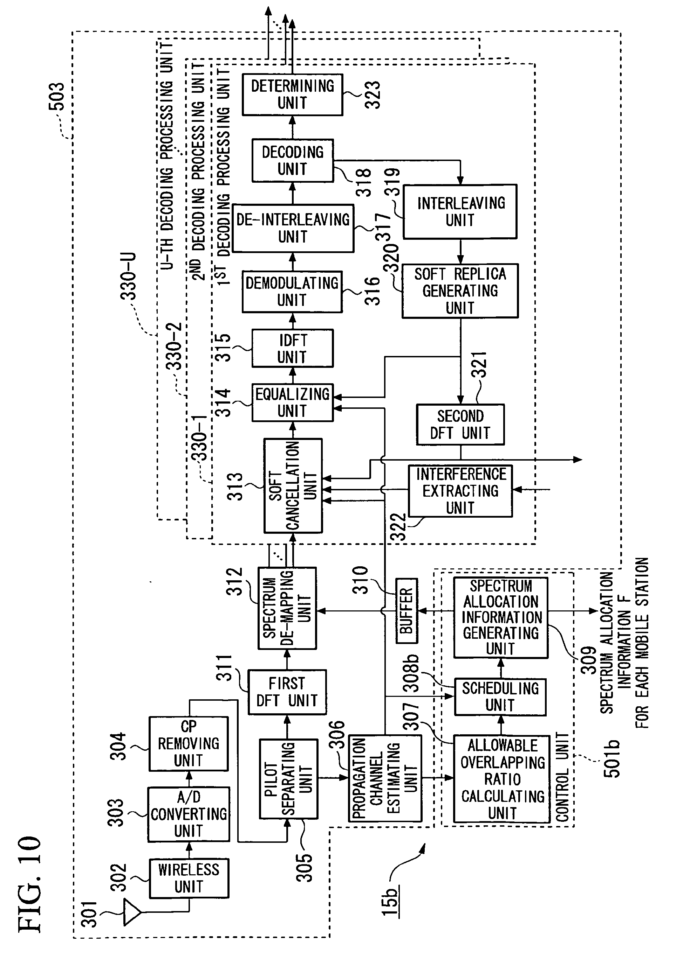

In the third embodiment, the spectra of as many mobile stations as possible overlap the same frequency, thereby achieving an improvement of the transmission rate by the spectrum overlapping, while suppressing the deterioration of characteristics caused by increasing the overlapping rate.
The wireless communication system according to the present embodiment has mobile station apparatuses 11 to 14 and a base station apparatus 15b. Because the configurations of the mobile station apparatuses 11 to 14 are the same as those of the mobile station apparatus 11 to 14 as shown in FIG. 2, their descriptions will be omitted herein. The base station apparatus 15b differs from the base station apparatus 15 shown in FIG. 2 in that the control unit 501 that performs scheduling is the control unit 501 b. FIG. 10 is a simplified block diagram showing the constitution of the receiving unit 503 and the control unit 501 b in the present embodiment. In the same drawing, the parts that are similar to ones shown in FIG. 4 are assigned the same reference symbols (301 to 307, 309 to 323, 330-1 to 330-U, and 503), and the descriptions thereof will be omitted. The control unit 501b has the allowable overlapping ratio calculating unit 307, the scheduling unit 308b, and the spectrum allocation information generating unit 309.
The scheduling section 308b establishes the allocated bandwidth that is not to be allowed to overlap, based on the number of mobile station apparatuses, the allocatable system bandwidth, and the allowable overlapping ratio given by the allowable overlapping ratio calculating unit 307 and, based on this allocated bandwidth that is not to be allowed to overlap, a frequency spectrum that that is not be allowed to overlap is allocated to each of the mobile station apparatuses 11 to 14. After that, the frequency spectra of all mobile station apparatuses 11 to 14 are allocated with overlapping with respect to frequencies that are left in the system bandwidth and that are not allocated.

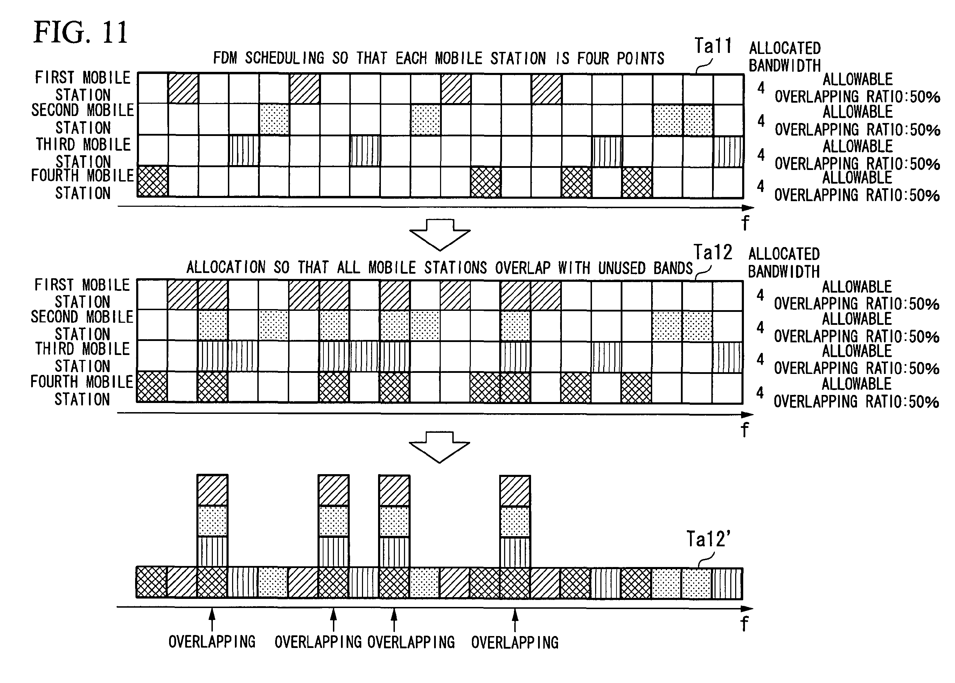

FIG. 11 is a drawing describing the operating principle in the scheduling unit 308b in the present embodiment. As shown in FIG. 1, in the case in which four mobile station apparatuses exist in one and the same cell, for the purpose of obtaining a maximum efficiency in utilizing frequency by using the spectrum overlapping, it is desirable that all overlapped portions of the four mobile station apparatuses are the same. In order to indicate the principle simplify, the system bandwidth will be taken as 20, the allocatable bandwidth of all the mobile stations as 20, and the allowable overlapping ratio that is required for the purpose of separating the overlapping is regarded as 50%. When overlapping is not allowed, the allocated bandwidth per a mobile station is calculated as the system bandwidth 20 divided by the number of all mobile stations 4 (that is, 20/4= 5), the result being 5 points per a mobile station.
However, applying the present embodiment, if all of half of the mobile station allocated bandwidths are allocated to one and the same frequency, the allocated bandwidth per a mobile station is calculated as (the system bandwidth 20 divided by ((the number of all mobile stations 4) × (1 - 0.5) + 0.5)) = 8. The result is 8 points. That is, as shown in table Ta11 of FIG. 11, first, 4 points × 4 = 16 points are spectra allocated by FDM scheduling so that the first to fourth mobile stations do not overlap with each other, and then, as shown in tables Ta12 and Ta 12' of FIG. 11, the remaining 4 points are allocated so that each mobile station overlaps, thereby enabling an allocated bandwidth per mobile station of 8 points. As a result, the efficiency in utilizing frequency can be improved by (8 - 5) / 5 = 60%. The reference symbol Ta12' shows the result of vertically sliding the units allocated to each mobile station to arrange them in a line, so as to clarify the overlapping in each frequency of scheduling allocation Ta12.

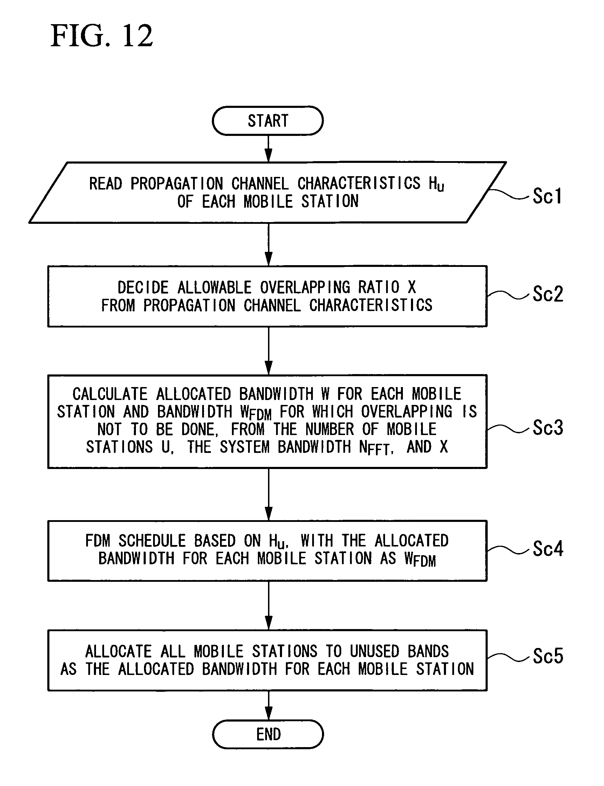

Operation of the scheduling unit 308b according to the present embodiment will be described using the more generalized flowchart. FIG. 12 is a flowchart describing the operation of the scheduling unit 308b. The number of mobile stations existing in one and the same cell is taken as U, the system bandwidth is taken as N_{FFT}. First, the scheduling unit 308b reads the propagation channel characteristics Hᵤ of each mobile station (Sc1), and next decides the allowable overlapping ratio X from Hᵤ (Sc2), after which, based on the U, N_{FFT} and the decided X, it calculates the bandwidth W that is allocatable by each mobile station and the bandwidth W_{FDM} to be allocated without overlapping (Sc3). W is determined by "N_{FFT} / (U (1 - X) + X)", and W_{FDM} is determined by "N_{FFT} / { U + X / (1 - X)}". After the W and W_{FDM} are determined, the scheduling unit 308b first performs FDM scheduling with the bandwidth W_{FDM} being allocatable by each mobile station (Sc4). In this relationship, W_{FDM} is a value that is set so as to cause to give a reserve commensurate with the amount of frequency overlapping, and the system bandwidth after performing the FDM scheduling, an unused portion of bandwidth of "W - W_{FDM}" is secured. After that, the scheduling unit 308b takes the allocated bandwidth of each mobile station as W, and all the mobile station spectra are allocated with respect to the unused portion of the bandwidth (Sc5), thereby securing the maximum allocated bandwidth, while maintaining the overlapping ratio of each mobile station within the range of X. In this case, in comparison with the case of not allowing overlapping, the frequency utilization efficiency can be improved by "U / (U (1 - X) + X)" times.
In the present embodiment, by multiplexing as many mobile stations as possible with respect to the frequency to be overlapped, the maximum allocated bandwidth is secured within the prescribed allowable overlapping ratio, while maintaining the ability to separate a signal using equalization processing, and also enabling the achievement of the maximum transmission rate.

Also, although the above described first and second embodiments have been presented for the cases in which the allocatable bandwidth of each mobile station is decided by the transmission power thereof, it may be decided by the bandwidth requested by the mobile station, and also may be a bandwidth in accordance with the service requested by the mobile station and, alternatively, may be a combination of these.

Alternatively, a program for the purpose of implementing the functions of the control unit 101 and the control unit 501 in FIG. 2, the control unit 501a in FIG. 7, and the control unit 501b in FIG. 10 may be recorded on a computer-readable recording medium, and a computer system may read and execute the program recorded on the recording medium, thereby performing the various parts of processing. The term "computer system" includes an operating system and also hardware, such as peripheral devices.

The term "computer-readable recording medium" refers to a portable medium, such as a flexible disk, an optical-magnetic disc, a ROM, and a CD-ROM, and a storage device, such as a hard disk, that is built into a computer system. The term "computer-readable recording medium" includes something that dynamically retains a program for a short time, for example, a communication line when the program is transmitted via a network such as the Internet, a communication line such as a telephone line, or the like, as well as a medium to retain a program for a certain time, for example, a flash memory internally provided in a computer system acting as the server and client in that case. The program may have the object of implementing a part of the above-described function, and it may also implement the above-described function in combination with a program already stored in a computer system.

Although the embodiments of the present invention are described above in detail with references made to the accompanying drawings, the specific configuration is not limited to the embodiments, and design changes and the like are encompassed within the scope thereof, without departing from the spirit of the present invention.

### Industrial Applicability

Although the present invention is preferable for use as a mobile communication system that is a wireless communication system using the cellular phone as a mobile station apparatus, this is not a restriction.

### Reference Symbols

- 11, 12, 13, 14:: Mobile station apparatus
- 15, 15a:: Base station apparatus
- 101:: Control unit
- 102:: Transmitting unit
- 103:: Receiving unit
- 201:: Coding unit
- 202:: Interleaving unit
- 203:: Modulation unit
- 204:: DFT unit
- 205:: Spectrum mapping unit
- 206:: IDFT unit
- 207:: Pilot signal generating unit
- 208:: Pilot multiplexing unit
- 209:: CP inserting unit
- 210:: D/A converting unit
- 211:: Wireless unit
- 212:: Transmitting antenna
- 301:: Receiving antenna
- 302:: Wireless unit
- 303:: A/D converting unit
- 304:: CP removing unit
- 305:: Pilot separating unit
- 306:: Propagation channel estimating unit
- 307:: Allowable overlapping ratio calculating unit
- 308, 308a, 308b:: Scheduling unit
- 309:: Spectrum allocation information generating unit
- 310:: Buffer
- 311:: First DFT unit
- 312:: Spectrum de-mapping unit
- 313:: Soft cancelling unit
- 314:: Equalizing unit
- 315:: IDFT unit
- 316:: Demodulating unit
- 317:: De-interleaving unit
- 318:: Decoding unit
- 319:: Interleaving unit
- 320:: Soft replica generating unit
- 321:: Second DFT unit
- 322:: Interference extracting unit
- 323:: Determining unit
- 330-1:: First decoding processing unit
- 330-2:: Second decoding processing unit
- 330-U:: U-th decoding processing unit
- 501, 501a, 501b:: Control unit
- 502:: Transmitting unit
- 503:: Receiving unit

## Claims

1. A wireless communication system comprising:
a plurality of transmitter apparatuses each of which converts a transmitted signal into a frequency signal, then places the frequency signal into a frequency spectrum allocated to the transmitter apparatus and then transmits the signal; and
a receiver apparatus that receives the signals transmitted by the plurality of transmitter apparatuses, removes the interference between the signals of the transmitter apparatuses, and separates the signals of the respective transmitter apparatuses;
wherein the bandwidth obtained by summing the frequency spectra allocated to the plurality of transmitter apparatus exceeds the allocatable system bandwidth.

2. The wireless communication system according to claim 1, wherein the frequency spectrum are allocated to the transmitter apparatus until the condition for ending allocation is satisfied, based on at least one of an allowable overlapping ratio that is an overlapping ratio of the frequency spectra between the transmitter apparatuses and that is an overlapping ratio satisfying the desired communication quality, and a transmittable bandwidth of each of the transmitter apparatuses.

3. The wireless communication system according to claim 1, wherein allocation that allows overlapping is additionally performed, after allocating the frequency spectrum with respect to the plurality of transmitter apparatus without allowing overlapping, until the condition for completion of allocation is satisfied, based on at least one of an allowable overlapping ratio that is an overlapping ratio of the frequency spectra between the transmitter apparatuses and that is an overlapping ratio satisfying the desired communication quality, and a transmittable bandwidth of each of the transmitter apparatuses.

4. The wireless communication system according to one of claim 2 and claim 3, wherein the condition for completion of allocation is such that the bandwidth obtained by summing the frequency spectra allocated to all of the transmitter apparatus reaches an allowable allocated bandwidth calculated by the allowable overlapping ratio and a system bandwidth, or the bandwidth obtained by summing the frequency spectra allocated to each of all the transmitter apparatus reaches the transmittable bandwidth of the transmitter apparatus.

5. The wireless communication system according to claim 1, wherein an allocated bandwidth not allowing overlapping is decided based on the number of a plurality of transmitter apparatuses, the allocatable system bandwidth, and the allowable overlapping ratio that is a overlapping ratio of the frequency spectra between the transmitter apparatuses and that is a overlapping ratio satisfying the desired communication quality and wherein after performing allocation not allowing overlapping based on the allocated bandwidth not allowing the overlapping, allocating of frequency spectra of all the transmitter apparatuses is done with respect to the frequencies not allocated.

6. The wireless communication system according to one of claim 2, claim 3 and claim 5, wherein the allowable overlapping ratio is calculated based on the propagation channel characteristics from the transmitter apparatus to the receiver apparatus so as to separate the received signals into signals of the respective transmitter apparatus with a desired quality in the receiver apparatus.

7. A base station apparatus that converts a transmitted signal into a frequency signal, receives the signals transmitted by a plurality of mobile station apparatuses, each of which places a frequency signal into a frequency spectrum allocated thereto and then transmits the signal, and removes the interference between the signals of the mobile station apparatuses and separates them into the signals of the respective mobile station apparatus;
wherein the bandwidth obtained by summing the frequency spectra allocated to the plurality of mobile station apparatuses exceeds the allocatable system bandwidth.

8. A method for allocating a frequency in a wireless communication system comprising:
a plurality of transmitter apparatuses each of which converts a transmitted signal into a frequency signal, places the frequency signal into a frequency spectrum allocated to the transmitter apparatus and then transmits the signal; and
a receiver apparatus that receives the signals transmitted by the plurality of transmitter apparatuses, removes the interference between the signals of the transmitter apparatuses, and separates them into signals of the respective transmitter apparatus;
wherein the bandwidth obtained by summing the frequency spectra allocated to the plurality of transmitter apparatus exceeds the allocatable system bandwidth.
